# EUROPÄISCHE PATENTSCHRIFT

(11) **EP 3 031 299 B1**
(45) Veröffentlichungstag und Bekanntmachung des Hinweises auf die Patenterteilung: **06.05.2020**
(21) Anmeldenummer: 14745139.7
(22) Anmeldetag: 31.07.2014
(51) Int. Cl.: H05B 45/10, H05B 45/48, H05B 47/185

(54) **DIMMBARE LED-LEUCHTMITTELSTRECKE**
DIMMABLE LED ILLUMINANT SYSTEM
SECTION DE MOYENS D'ÉCLAIRAGE À DEL À INTENSITÉ VARIABLE

(30) Priorität: 05.08.2013 DE 102013215334
(43) Veröffentlichungstag der Anmeldung: 15.06.2016
(73) Patentinhaber: Tridonic GmbH & Co. KG, 6851 Dornbirn (AT)
(72) Erfinder: BARTH, Alexander, A-6861 Alberschwende (AT)
(74) Vertreter: Rupp, Christian
(86) Internationale Anmeldenummer: PCT/EP2014/066496
(87) Internationale Veröffentlichungsnummer: WO 2015/018735

(56) Entgegenhaltungen:
- EP-A1- 1 006 506
- WO-A1-2010/027254
- DE-A1-102010 040 266
- US-A1- 2010 231 135
- US-A1- 2012 038 284

## Beschreibung

Die Erfindung betrifft eine dimmbare LED-Leuchtmittelstrecke. Die dimmbare LED-Leuchtmittelstrecke weist dabei wenigstens zwei parallele und/oder gegenparallel geschaltete LED-Leuchtmittelketten sowie eine Steuereinheit auf. Insbesondere sind die LED-Leuchtmittelketten als LED-Ketten ausgestaltet und jede LED-Leuchtmittelkette weist wenigstens ein Leuchtmittel Leuchtdiode als, also eine LED, auf. Weiter betrifft die Erfindung ein Verfahren zum Betrieb einer LED-Leuchtmittelstrecke, eine LED-Lampe aufweisend eine LED-Leuchtmittelstrecke gemäß der Erfindung, und eine Retrofit-Lampe aufweisend eine LED-Leuchtmittelstrecke gemäß der Erfindung. Unter einer Leuchtdiode (LED) sind dabei sowohl anorganische als auch organische Leuchtdioden zu verstehen.

Unter "LED-Lampen" sind insbesondere LED-Lampen zu verstehen, die als Leuchtmittel eine oder mehrere LEDs verwenden, aber ein Gehäuse und vorzugsweise eine Optik aufweisen, und über Mittel zur mechanischen und elektrischen Verbindung der LED-Lampe sowie eine Elektronik zur Speisung der LED verfügen.

Unter "Retrofit-Lampen" sind insbesondere Retrofit LED-Lampen zu verstehen, die als Leuchtmittel eine oder mehrere LEDs verwenden, aber zur mechanischen und elektrischen Verbindung derart ausgebildet sind, dass sie als Ersatzmittel anderer Leuchtmittel, wie bspw. Glüh- oder Halogenlampen, verwendbar sind.

Die Druckschrift WO 2010/027254 A1 offenbart eine LED-basierte Beleuchtungsanwendung und die Druckschrift US 2010/0231135 A1 offenbart ein rekonfigurierbares LED-Array sowie eine Verwendung dessen in einem Beleuchtungssystem.

Die Druckschrift US 2012/0038284 A1 offenbart eine Beleuchtungsvorrichtung, die gedimmt werden kann und einer Änderung der Farbtemperatur der Beleuchtungsfarbe in Übereinstimmung mit einem Dimmpegel unterzogen werden kann.

Retrofit-Lampen sind mit Schraub-, Bajonett- oder Steck-Sockeln versehen, die zu den für Glüh- oder Halogenlampen entwickelten Fassungen passend sind. Diese mechanische Anpassung allein ist jedoch für den Ersatz noch nicht ausreichend. Wegen der unterschiedlichen Betriebsweisen von Glühlampen (verarbeiten Wechselspannungshalbwellen mit beiden Polaritäten) einerseits und Leuchtdioden (sind nur bei Wechselspannungshalbwellen einer bestimmten Polarität wirksam) andererseits, sind zusätzlich noch Anpassungsmaßnahmen erforderlich. Letztere betreffen insbesondere auch die Art des Dimmens.

Nachteilig an Vorrichtungen bei denen mehrere identische LED-Ketten in paralleler Schaltung direkt mit einer Wechselspannung betrieben werden, dass die LED-Ketten in ihrer Helligkeit synchron zu der Wechselspannung ihre Helligkeit verändern und den Verlauf der Wechselspannung synchron mit einer Helligkeitsmodulation nachvollziehen. Um zu vermeiden, dass sich eine LED-Strecke in ihrer Helligkeit synchron zu der angelegten Wechselspannung verhält, werden synchron mit dem Verlauf der Wechselspannung selektiv für jede der parallelen LED-Ketten eine bestimmte Anzahl von LEDs zu- bzw. abgeschaltet.

Dies führt jedoch dazu, dass sich eine Modulation der Helligkeit der dargestellten Schaltung einstellt, beispielsweise bei 100 Hertz, die für das menschliche Auge belastend sein kann, da diese Modulation immer noch wahrgenommen wird. Zudem ist mit der Schaltung nach dem Stand der Technik kein Dimmen möglich.

Aufgabe der Erfindung ist es nun, eine Dimmtechnik bereitzustellen, die die Nachteile des Standes der Technik überwindet. Dazu stellt die Erfindung eine dimmbare LED-Leuchtmittelstrecke, ein Dimmverfahren, eine LED-Lampe und eine Retrofitlampe gemäß der unabhängigen Ansprüche bereit. Weitere Fortbildungen der Erfindung sind Gegenstand der abhängigen Ansprüche.

Es wird eine dimmbare LED-Leuchtmittelstrecke bereitgestellt mit wenigstens zwei parallel und/oder gegenparallel geschalteten LED-Leuchtmittelketten aufweisend jeweils mehrere Leuchtdioden, wobei die LED-Leuchtmittelstrecke eine Steuereinheit aufweist und über eine Versorgung gespeist wird, die dazu eingerichtet ist, über die Versorgung eine Dimminformation zugeführt zu bekommen und abhängig von der zugeführten Dimminformation und zu deren Umsetzung einzelne der parallel/gegenparallel geschalteten LED-Leuchtmittelketten stufenweise an- und/oder abzuschalten.

Jede Leuchtdiode der LED-Leuchtmittelstrecke ist durch jeweils wenigstens ein parallel dazu vorgesehenes und von der Steuereinheit schaltbares Schaltelement überbrückbar. Die Steuereinheit kann die Schaltelemente aktivieren oder deaktivieren, insbesondere in Abhängigkeit von einer elektrischen Versorgung der LED-Leuchtmittelstrecke.

Die elektrische Versorgung der LED-Leuchtmittelstrecke kann eine Wechselspannung oder eine Gleichspannung sein.

Die LED-Leuchtmittelstrecke kann gegenparallel geschaltete LED-Leuchtmittelketten aufweisen und direkt ausgehend von einer Wechselspannung betrieben werden. Die LED-Leuchtmittelstrecke kann parallel geschaltete LED-Leuchtmittelketten aufweisen und direkt ausgehend von einer Gleichspannung betrieben werden. Die LED-Leuchtmittelstrecke kann parallel geschaltete Leuchtmittelketten aufweisen, denen ein Gleichrichter vorgeschaltet ist, und direkt ausgehend von einer Wechselspannung betrieben werden.

Die Steuereinheit ist dazu eingerichtet, abhängig von der elektrischen Versorgung der LED-Leuchtmittelstrecke einzelne Leuchtdioden in den LED-Leuchtmittelketten, die in verschiedenen LED-Leuchtmittelketten im Wesentlichen eine Koordinate in ihrer räumlichen Ausrichtung teilen, durch aktivieren bzw. deaktivieren der Schaltelemente an- bzw. abzuschalten.

Ein Konverter kann eine Wechselspannung in eine Gleichspannung wandeln und die Gleichspannung als elektrische Versorgung der LED-Leuchtmittelstrecke bereitstellen.

Der Konverter kann eine der LED-Leuchtmittelstrecke zugeführte elektrische Versorgung abhängig von einer Dimminformation verändern. Der Konverter kann beispielsweise ein Flyback Konverter (isolierter Sperrwandler), ein Tiefsetzsteller (Buck Konverter) oder einen isolierter Halbbrückenwandler sein.

Die Steuereinheit kann ein mittels der Versorgungsspannung übertragenes Signal, beispielsweise ein Phasenan/- abschnittsignal und/oder eine selektive Halbwellengleichrichtung, auswerten um die Dimminformation zu erfassen.

Die Steuereinheit kann durch Auswerten der elektrischen Versorgung der LED-Leuchtmittelstrecke, insbesondere einer Veränderung der elektrischen Versorgung (beispielsweise der Versorgungsspannung), die Dimminformation erfassen. Die elektrische Versorgung kann eine von einem Konverter ausgegebene Gleichspannung sein. Die Dimminformation kann eine Amplitude/Amplitudenänderung der elektrischen Versorgung sein.

Die LED-Leuchtmittelstrecke kann einen Gleichrichter und/oder den Ansteuer-Konverter aufweisen.

Die Leuchtdioden und die Schaltelemente zur Überbrückung sind in einer Matrixstruktur angeordnet, wobei in jeder LED-Leuchtmittelzeile wenigstens eine Leuchtdiode überbrückbar ist und in jeder LED-Leuchtmittelkette wenigstens ein von der Steuereinheit schaltbares Schaltelement vorgesehen ist, das dazu eingerichtet ist, die jeweilige LED-Leuchtmittelkette an- oder abzuschalten.

In einem weiteren Aspekt wird eine LED-Lampe bereitgestellt, aufweisend eine LED-Leuchtmittelstrecke nach einem der vorstehenden Ansprüche.

In einem weiteren Aspekt wird eine Retrofit-Lampe bereitgestellt, aufweisend eine LED-Leuchtmittelstrecke nach einem der vorstehenden Ansprüche.

In noch einem weiteren Aspekt wird ein Verfahren bereitgestellt zur Ansteuerung einer dimmbaren LED-Leuchtmittelstrecke mit wenigstens zwei parallel und/oder gegenparallel geschalteten LED-Leuchtmittelketten wobei eine Steuereinheit der LED-Leuchtmittelstrecke eine über die Versorgung zugeführte Dimminformation erfasst und abhängig von der erfassten Dimminformation und zu deren Umsetzung einzelne der parallel/gegenparallel geschalteten LED-Leuchtmittelketten stufenweise an- und/oder abschaltet, wobei jede Leuchtdiode durch jeweils wenigstens ein parallel dazu vorgesehenes und von der Steuereinheit schaltbares Schaltelement überbrückbar ist.

Die Erfindung ist durch die unabhängigen Ansprüche 1 und 13 definiert und wird nunmehr auch mit Bezug auf die Figuren beschrieben. Dabei zeigen:
- Fig. 1: schematisch eine LED-Leuchtmittelstrecke;
- Fig. 2: schematisch eine weitere LED-Leuchtmittelstrecke;
- Figs. 3a)-c): schematisch Schaltungsanordnungen mit den LED-Leuchtmittelstrecken aus Fig. 1 und Fig. 2;
- Fig. 4a): schematisch eine Retrofitlampe mit der LED-Leuchtmittelstrecke aus Fig. 1;
- Fig. 4b): schematisch eine Retrofitlampe mit der LED-Leuchtmittelstrecke aus Fig. 2;
- Fig. 5: schematisch ein Steuergerät für eine LED-Leuchtmittelstrecke;
- Fig. 6: schematisch ein selektives Gleichrichten mit dem Steuergerät aus Fig. 5.

Gemäß der Erfindung ist es vorgesehen, dass eine Dimminformation einer Steuereinheit an einem Eingang über die Versorgung zugeführt wird. Die Steuereinheit schaltet nun, im Gegensatz zum Stand der Technik nicht nur einzelne LEDs in einer LED-Leuchtmittelkette bzw. LED-Kette aus, sondern kann ebenfalls, insbesondere ein stufenweises Dimmen ausführen, indem selektiv komplette LED-Leuchtmittelketten zu- oder abgeschaltet werden.

Für Beleuchtungssysteme mit herkömmlichen Glühlampen haben sich weitgehend Phasenanschnittsdimmer durchgesetzt. Dies insbesondere deshalb, weil sie weitgehend verlustfrei arbeiten. Letzteres trifft jedoch für den Betrieb mit LEDs nicht zu. Um die Leistungsverluste zu begrenzen, ist ein beachtlicher zusätzlicher Schaltungsaufwand erforderlich. Hinzu kommt, dass Phasenanschnittsdimmer - auch bei einem Betrieb mit Glühlampen - zwangsläufig unerwünschte - Oberwellen ins Netz strahlen. Von modernen Modulen erwartet man jedoch eine weitgehend sinusförmige Stromaufnahme. Diese ist durch den zusätzlichen Einbau von aktiv getakteten PFCs (Leistungsfaktor-Korrekturschaltungen) erreichbar.

Eine Signalübertragung hin zu einem mit AC-Spannung versorgten elektrischen Verbraucher, insbesondere einer LED-Lampe oder Retrofit-Lampe, kann dadurch erfolgen, dass wenigstens die Signalzustände "Anliegen eines Phasenan/- abschnittsignals" und "Nicht-Anliegen eines Phasenan/- abschnittsignals" oder "gleichgerichtete AC-Spannung" und "nicht gleichgerichtete, also bipolare AC-Spannung" vorliegen.

Ausgehend von diesen beiden logischen Zuständen lassen sich beliebig komplexe analoge oder digitale Signalprotokolle implementieren. Analog ist bspw. eine Auswertung, durch eine Steuereinheit, der Dauer und/oder einer Wiederholrate des jeweiligen logischen Zustands. Für eine digitale Signalübertragung können die beiden genannten physikalischen Zustände als logisch "1" und "0" verwendet werden.

Dieses Protokoll kann adressiert oder unadressiert sein. Im Falle einer Adressierung können Daten oder Signale Teil des Protokolls sein.

Die genannte Kommunikationstechnik durch selektiven Phasenan/-abschnitt oder selektives Gleichrichten schließt grundsätzlich nicht aus, dass auf der AC-Versorgungsleitung weitere logische Zustände zusätzlich zu den beiden genannten Zuständen vorliegen können. Diese können bspw. eine PLC-Modulation (power line carrier, hochfrequente Modulation mit vorzugsweise niedriger Amplitude) oder eine zeitweise Unterdrückung der AC-Spannung sein.

Auch Phasenabschnitts oder - anschnitt lassen sich in Kombination mit dem selektiven Gleichrichten implementieren, und es bestehen weitere Kombinationsmöglichkeiten wie beispielsweise eine zusätzliche Amplitudenmodulation.

Es ist auch grundsätzlich nicht ausgeschlossen, dass zusätzlich zu der genannten Signalübertragung ein weiteres drahtloses (bspw. Funk, optisch, IR,...) oder drahtgebundenes Medium (bspw. digitaler und/oder analoger Bus) vorgesehen ist.

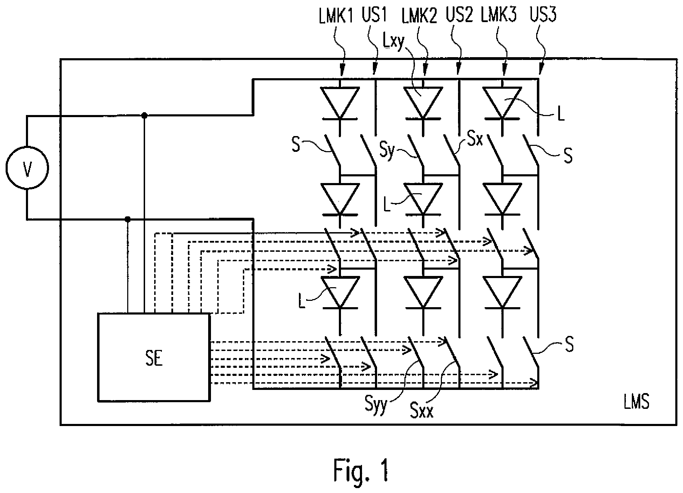

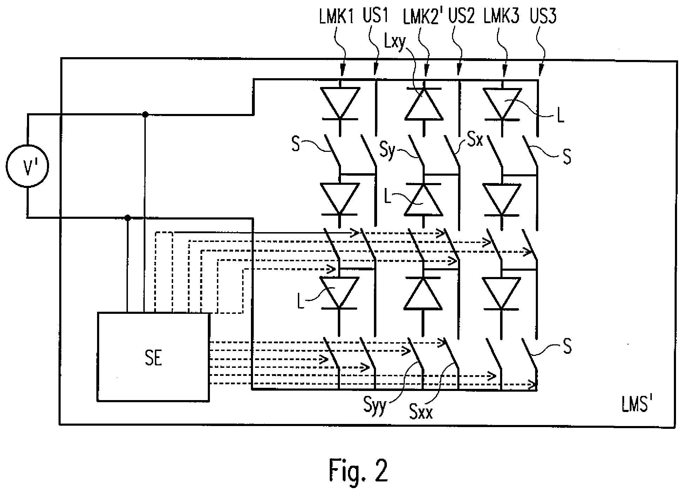

Vorzugsweise erfolgt also durch selektiven Phasenan/- abschnitt oder selektives Gleichrichten der AC-Versorgungsspannung eine Signalübertragung hin zum Steuergerät 5. Falls ein Rückkanal vorliegen soll, kann dieser durch eine beliebige andersartige Signalisierung (siehe die obigen Beispiele) erfolgen. Es wird hier Bezug genommen auf das Dokument DE 10 2011 089 833 A1, und besonders auf die Figs. 1a, 1b und 2 mit der zugehörigen Beschreibung. Dort wird die Funktionsweise der Signalübertragung durch selektives Gleichrichten in verschiedenen Ausprägungen beschrieben.

Insbesondere sind die Leuchtdioden (als Leuchtmittel der LED-Leuchtmittelketten, also die LEDs der LED-Ketten) in einer Matrixanordnung angeordnet und eine bestimmte Anzahl der Leuchtdioden kann durch parallel zu den Leuchtdioden vorgesehene Schaltelemente überbrückt werden. Insbesondere kann je Leuchtdiode ein Schaltelement vorgesehen sein.

Die Dimminformation, die vorzugsweise einen Dimmwert wiedergibt, kann von der Steuereinheit durch Auswertung der der LED-Leuchtmittelstrecke zugeführten elektrischen Versorgung, also insbesondere der an der LED-Leuchtmittelstrecke zugeführten Versorgungsspannung, ermittelt werden. Insbesondere kann die Steuereinheit beispielsweise einen selektiven Phasenan/-abschnitt oder selektives Gleichrichten der Versorgungsspannung auswerten und daraufhin selektiv einzelne, mehrere oder alle Leuchtmittelstränge durch Aktivierung/Deaktivierung der vorgesehenen Schaltelemente an- und/oder abschalten. Als Aktivierung eines Schaltelements wird hier das Schalten des Schaltelements in den leitenden Zustand verstanden.

Soll ein Betrieb der LED-Leuchtmittelstrecke direkt an einer Wechselstrom-/Wechselspannungsversorgung erfolgen, so kann der LED-Leuchtmittelstrecke ein Gleichrichter vorgeschaltet sein, der die Wechselspannung in eine Gleichspannung wandelt. Der Gleichrichter kann als Vollweggleichrichter oder als Einweggleichrichter ausgebildet sein. Es kann jedoch auch vorgesehen sein, die Leuchtmittelketten anti- oder gegenparallel zu schalten, sodass die LED-Leuchtmittelstrecke direkt ausgehend von einer Wechselspannung versorgt werden kann und somit ein entsprechender Betrieb der LED-Leuchtmittelstrecke auch bei einer Wechselspannungsversorgung erfolgen kann. Vorzugsweise existiert zu jeder LED-Leuchtmittelkette eine dazu gegenparallel geschaltete LED-Leuchtmittelkette, sodass jeweils Paare der LED-Leuchtmittelketten vorliegen. Durch die gegenparallele Anordnung der LED-Leuchtmittel, also der LEDs, ist dann für jede Halbwelle der Wechselspannungsversorgung zumindest ein Teil der LED-Leuchtmittelketten aktiv.
Die Steuereinheit erfasst eine Dimminformation (ein Dimmsignal) bzw. ermittelt dies aus der ihr zugeführten Versorgungsspannung und aktiviert/deaktiviert stufenweise die LED-Leuchtmittelketten der LED-Leuchtmittelstrecke.

Insbesondere erfolgt dieses Zu- und Abschalten durch Schaltelemente/Überbrückungen, bzw. durch Abschalten/Zuschalten der Versorgungspfade zu den LED-Leuchtmittelketten mittels der Schaltelemente. Abhängig von der der Steuereinheit zugeführten, oder der von ihr ermittelten elektrischen Versorgung der dimmbaren LED-Leuchtmittelstrecke kann die Steuereinheit nunmehr einzelne Leuchtdioden in den LED-Leuchtmittelketten durch Aktivierung/Deaktivierung eines oder mehrerer entsprechender Schaltelemente Zuschalten oder Abschalten. Dies kann selektiv erfolgen.

Abhängig von der zugeführten Dimminformation werden dann von der Steuereinheit eine oder mehrere LED-Leuchtmittelketten deaktiviert oder aktiviert.

Bei Anordnung der LED-Leuchtmittelketten bzw. Leuchtdioden in einer Matrixstruktur kann die Steuereinheit insbesondere bei Versorgung der LED-Leuchtmittelstrecke ausgehend von einer Wechselspannung, abhängig von der erfassten Spannung einzelne Leuchtdioden in den LED-Leuchtmittelketten aktivieren/deaktivieren. So können im Wesentlichen Leuchtdioden entlang einer Achse der Matrix, z.B. im Wesentlichen Leuchtdioden in einer LED-Leuchtmittelzeile, deaktiviert oder aktiviert werden.

Im Wesentlichen weisen also die vorzugsweise entsprechenden Leuchtdioden eine gleiche Koordinate in ihrer räumlichen Ausrichtung, bzw. ein gleiches Koordinatenverhältnis (z.B. für Diagonalen) auf.

Abhängig von der Amplitude der Versorgung, die von der Steuereinheit erfasst wird, können somit durch die Steuereinheit eine oder mehrere LED-Leuchtmittelzeilen deaktiviert oder aktiviert werden.

Um einen Rippel, z.B. bei 100 Hertz, zu vermeiden, der eine Fluktuation/Modulation der von der LED-Leuchtmittelstrecke abgegebenen Intensität/Helligkeit verursacht, kann der LED-Leuchtmittelstrecke ein Konverter, insbesondere ein AC/DC Konverter (AC=Wechselspannung/-strom, DC=Gleichspannung/-strom; Konverter ist Wandler für die Wandlung von Wechselspannung/-strom zu Gleichspannung/-strom) vorgeschaltet sein, sodass die LED-Leuchtmittelketten der LED-Leuchtmittelstrecke nicht mit Wechselstrom, sondern insbesondere mit Gleichstrom betrieben werden. Damit kann die Helligkeitsmodulation der LED-Leuchtmittelstrecke verringert werden.

Der eingesetzte AC/DC Konverter kann ebenfalls dazu eingerichtet sein, ein Dimmsteuersignal auszuwerten. Dies kann beispielsweise ein digitales Bussignal, welches über einen drahtgebundenen oder drahtlosen Bus zugeführt wird, ein Phasenanschnittssignal sein, ein Phasenabschnittssignal oder ein Dimmsteuersignal, das sich aus der Auswertung der dem Konverter zugeführten Versorgungsspannungshalbwellen ergibt.
Bei Einsatz des AC/DC Konverters erfolgt somit die Ansteuerung der LED-Leuchtmittelstrecke mit Gleichspannung. Eine von dem AC/DC Konverter erfasste und ausgewertete Dimminformation kann nun von der Steuereinheit so ausgewertet werden, dass einzelne in der LED-Leuchtmittelstrecke vorgesehene Schaltelemente von der Steuereinheit geschaltet werden, sodass die erfasste Dimminformation vorzugsweise zum selektiven vollständigen An- und Abschalten einzelner/mehrerer/aller LED-Leuchtmittelketten erfolgen kann.

Bei Vorhandensein von dem AC/DC Konverter kann die Dimminformation, die vorzugsweise einen Dimmwert wiedergibt, von der Steuereinheit durch Auswertung der von dem AC/DC Konverter der LED-Leuchtmittelstrecke zugeführten elektrischen Versorgung, also insbesondere der von dem AC/DC Konverter der LED-Leuchtmittelstrecke zugeführten Versorgungsspannung, ermittelt werden. Insbesondere bei Vorhandensein eines AC/DC Konverters kann die Steuereinheit beispielsweise auch eine Amplitude der Versorgungsspannung auswerten und daraufhin selektiv einzelne, mehrere oder alle Leuchtmittelstränge durch Aktivierung/Deaktivierung der vorgesehenen Schaltelemente an- und/oder abschalten.

Bei Vorhandensein eines AC/DC Konverters kann es sich bei der von der Steuereinheit ausgewerteten Versorgungsspannung um eine von dem AC/DC Konverter ausgegebene Gleichspannung handeln.

Fig. 1 zeigt exemplarisch eine LED-Leuchtmittelstrecke LMS gemäß der Erfindung.
Ausgehend von einer elektrischen Versorgung V werden LED-Leuchtmittelketten LMK1, LMK2, LMK3 betrieben. Die LED-Leuchtmittelketten LMK1, LMK2, LMK3 sind im dargestellten Schema parallel geschaltet und weisen jeweils LED-Leuchtmittel L (also eine Leuchtdiode bzw. LED) auf. Mit den Leuchtdioden L sind Schaltelemente S in Serie und parallel geschaltet. Die zu den Leuchtdioden L parallelen Schaltelemente S dienen nun einerseits dazu, einzelne Leuchtdiode L zu überbrücken und somit zu deaktivieren, während die in Serie mit den Leuchtdioden L verschalteten Schaltelemente S dazu dienen können, Leuchtdioden L aus der jeweiligen LED-Leuchtmittelkette auszukoppeln, bzw. den Versorgungspfad einer LED-Leuchtmittelkette zu unterbrechen und damit die LED-Leuchtmittelkette zu deaktivieren. Beispielseise sind die zu der zweiten LED-Leuchtmittelkette LMK2 parallelen Überbrückungsschaltelemente in Fig. 1 mit US2 bezeichnet. Analog bezeichnet US1 die Überbrückungsschaltelemente einer ersten LED-Leuchtmittelkette LMK1 und US3 die Überbrückungsschaltelemente einer dritten LED-Leuchtmittelkette LMK3. Beispielsweise können durch die zu den Leuchtdioden L parallelen Schaltelemente S einzelne Leuchtdioden L überbrückt und somit deaktiviert werden, und auf diese Weise kann eine LED-Leuchtmittelzeile (also auf gleicher Ebene, quasi parallel angeordnete Leuchtdioden) überbrückt und somit deaktiviert werden. Alternativ zu einer LED-Leuchtmittelzeile kann aber beispielsweise auch eine LED-Leuchtmitteldiagonale überbrückt und somit deaktiviert werden. Grundsätzlich kann bei einer deartigen Überbrückt und somit Deaktivierung für jede aktive LED-Leuchtmittelkette jeweils eine Leuchtdiode oder eine gleiche Anzahl an Leuchtdioden überbrückt und somit deaktiviert werden. Weiter ist eine Steuereinheit SE vorgesehen, z.B. eine integrierte Schaltung IC, eine ASIC und/oder ein Mikrocontroller, die dazu eingerichtet ist, die Schaltelemente S der LED-Leuchtmittelstrecke LMS zu deaktivieren und/oder zu aktivieren, d.h. nicht-leitend bzw. aus- und/oder leitend bzw. einzuschalten. Die Ansteuerung durch die Steuereinheit SE ist exemplarisch durch die gestrichelten Pfeile in Fig. 1 angedeutet.

Weiter ist die Steuereinheit SE direkt oder indirekt mit der elektrischen Versorgung V verbunden. So kann die Steuereinheit SE einerseits elektrisch versorgt werden, andererseits kann die Steuereinheit SE die elektrische Versorgung auswerten und auf ein Ergebnis dieser Auswertung hin wenigstens einen, vorzugsweise mehrere der Schaltelemente S ein- und/oder ausschalten. So kann z.B. durch Ausschalten eines Schaltelements Sx und durch Einschalten eines Schaltelements Sy eine Leuchtdiode Lxy deaktiviert werden. Sind alle mit der Leuchtdiode Lxy in Serie geschalteten Schaltelemente S aktiviert, d.h. eingeschaltet, und lediglich das Schaltelement Sy deaktiviert, d.h. ausgeschaltet, und ist weiter wenigstens eines der Überbrückungsschaltelemente US2 deaktiviert. So ist die gesamte zweite LED-Leuchtmittelkette LMK2 deaktiviert. Vorzugsweise erfolgt das abschalten der zweiten LED-Leuchtmittelkette LMK2 jedoch durch deaktivieren der Schaltelemente Syy und Sxx, wie sie in Fig. 1 dargestellt sind. Vorzugsweise weist die LED-Leuchtmittelstrecke LMS an ihrem Eingang einen Gleichrichter auf, welcher in der Fig. 1 nicht abgebildet ist. Der Gleichrichter kann als Vollweggleichrichter oder als Einweggleichrichter ausgebildet sein.
Der Gleichrichter kann direkt am Eingang der LED-Leuchtmittelstrecke LMS angeordnet sein oder nach der Verbindung der Steuereinheit SE mit der elektrischen Versorgung V.

Es ist zu verstehen, dass die Ansteuerung der übrigen Schaltelemente der ersten und dritten LED-Leuchtmittelkette LMK1, LMK3 und/oder der zugehörigen Überbrückungsschaltelemente US1, US3 analog erfolgen kann.

Durch die passende Anordnung der Schaltelemente S ist es möglich, im Prinzip jede Kombination von deaktivierten/aktivierten Leuchtdioden L zu erzeugen. Speziell ist es möglich jede der LED-Leuchtmittelketten LMK1, LMK2, LMK3 vollständig zu deaktivieren.

Fig. 2 zeigt nunmehr exemplarisch eine LED-Leuchtmittelstrecke LMS' die im Wesentlichen die gleiche Funktionalität bietet, wie die in Fig. 1 gezeigte LED-Leuchtmittelstrecke LMS. Die Bezugszeichen sind daher identische mit denen aus Fig. 1. Lediglich eine zweite LED-Leuchtmittelkette LMK2' ist nunmehr gegenparallel zu der ersten LED-Leuchtmittelkette LMK1 und der dritten LED-Leuchtmittelkette LMK3 verschaltet. Zur vereinfachten Darstellung ist hier eine unsymmetrische Anzahl gegenparalleler LED-Leuchtmittelkette dargestellt, vorzugsweise wird eine symmetrische Anzahl gegenparalleler LED-Leuchtmittelketten gewählt. Auch eine elektrische Versorgung V' der LED-Leuchtmittelstrecke LMS' ist von der elektrischen Versorgung V der LED-Leuchtmittelstrecke LMS verschieden gewählt.

Beispielsweise kann die elektrische Versorgung V eine Versorgung mit Gleichspannung/-strom sein, während die elektrische Versorgung V' eine Versorgung mit Wechselspannung/-strom sein kann.

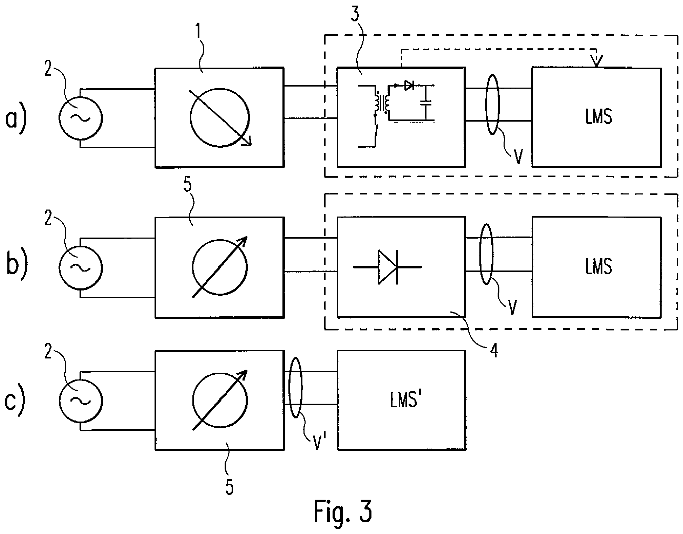

Figs. 3a-c zeigen nun exemplarisch und schematisch einen möglichen Einsatz der LED-Leuchtmittelstrecken LMS, LMS' aus den Figs. 1 und 2.
Figs. 3a-c zeigen Anwendungsfälle, in denen ein Dimmer 1 ausgehend von einer Netzversorgung 2 gespeist wird. Bei dem Dimmer 1 kann es sich insbesondere um einen Triac bzw.
einen Phasenan-/-abschnittsdimmer handeln. Alternativ kann auch ein Dimmsteuersignal über einen digitalen Bus zugeführt werden oder es kann sich um eine Dimmerschaltung handeln, die ein selektives Gleichrichten ausführt, wie es in der DE 10 2011 089 833 A1 beschrieben ist.

Der Dimmer 1 wirkt auf die elektrische Versorgung V, V' der LED-Leuchtmittelstrecke LMS, LMS' ein und verändert diese abhängig von einer an dem Dimmer eingestellten Dimmwert. Dieser Dimmwert gibt an, wie die Leistung der LED-Leuchtmittelstrecke LMS, LMS' verändert werden soll. Eine Erhöhung des Dimmwerts soll dabei gewöhnlich eine Steigerung der abgegebenen Lichtleistung bewirken, wobei z.B. ein Dimmwert von 100% anzeigt, dass die LED-Leuchtmittelstrecke LMS, LMS' mit voller Leistung/Helligkeit betrieben werden soll. Eine Verringerung des Dimmwerts führt dagegen normalerweise zu einer Reduzierung der Lichtleistung bzw. der Helligkeit.

In den Figs. 3a und 3b ist zwischen dem Dimmer 1 und der LED-Leuchtmittelstrecke LMS jeweils eine zusätzliche Komponente angeordnet.

Im Fall der Fig. 3a ist dies ein Konverter 3, insbesondere ein AC/DC Konverter, der einerseits eine Gleichrichtung der von dem Dimmer 1 gelieferten elektrischen Versorgung durchführen kann und andererseits abhängig von einem eingestellten Dimmwert, also insbesondere abhängig von der von dem Dimmer 1 gelieferten Leistung, eine Ausgabeleistung und damit die elektrische Versorgung V der LED-Leuchtmittelstrecke LMS einstellen kann.

Dabei kann der Konverter 3 die ihm von dem Dimmer 1 zugeführte elektrische Versorgung auswerten und eine den am Dimmer 1 eigestellten Dimmwert wiedergebende Dimminformation bestimmen. Dazu kann der Konverter eine entsprechende Auswerteschaltung (IC, ASIC, Mikrokontroller, ...) aufweisen. Diese Dimminformation kann der Konverter 3 dann durch Modulation der elektrischen Versorgung V an die Steuereinheit SE (hier nicht gezeigt) der LED-Leuchtmittelstrecke LMS übermitteln oder auch zusätzlich, beispielsweise für spezielle Daten, über einen separaten Pfad (gestrichelter Pfeil).

Wie oben beschrieben kann die Steuereinheit SE der LED-Leuchtmittelstrecke LMS somit vorzugsweise ohne zusätzlichen Informationskanal wie beispielsweise eine zusätzliche Datenleitung die elektrische Versorgung V auswerten um die Dimminformation zu erfassen und die Schaltelemente S entsprechend zu steuern.

Der Konverter 3 und die LED-Leuchtmittelstrecke LMS sind vorzugsweise als separate Komponenten bzw. Bauteile vorgesehen. Der gestrichelte Kasten um diese Komponenten zeigt an, dass der Konverter 3 und die LED-Leuchtmittelstrecke LMS in einer optionalen Variante als integrierte Komponente/integriertes Bauteil ausgebildet sein können. Der Konverter 3 übernimmt in diesem Beispiel der Fig. 3a die Funktion des Steuergerätes 5, da er eine Dimminformation mit der Versorgung ausgibt.

In Fig. 3b ist ein Steuergerät 5 vorhanden, welches eine Dimminformation auf die Versorgung überträgt. Die Versorgung mit der Dimminformation wird einem Gleichrichter 4 zugeführt, so dass zwar eine Gleichrichtung erfolgt, aber diese Versorgung beinhaltet immer noch die Dimminformation. Die Steuereinheit SE wertet die elektrische Versorgung V aus, um die Dimminformation zu erfassen. Dieses Beispiel der Fig. 3b eignet sich insbesondere für die Übertragung eines selektiven Phasenan/-abschnitts als Dimminformation von dem Steuergerät 5 an die LED-Leuchtmittelstrecke LMS.

In Fig. 3c ist nunmehr ein direkter Betrieb der LED-Leuchtmittelstrecke LMS' an dem Steuergerät 5 gezeigt, wobei hier als elektrische Versorgung V' eine Wechselspannung vorliegt. Die LED-Leuchtmittelstrecke LMS' entspricht folglich im Wesentlichen der aus Fig. 2 oder es ist wie im Beispiel 1 erläutert am Eingang der LED-Leuchtmittelstrecke LMS ein Gleichrichter integriert.

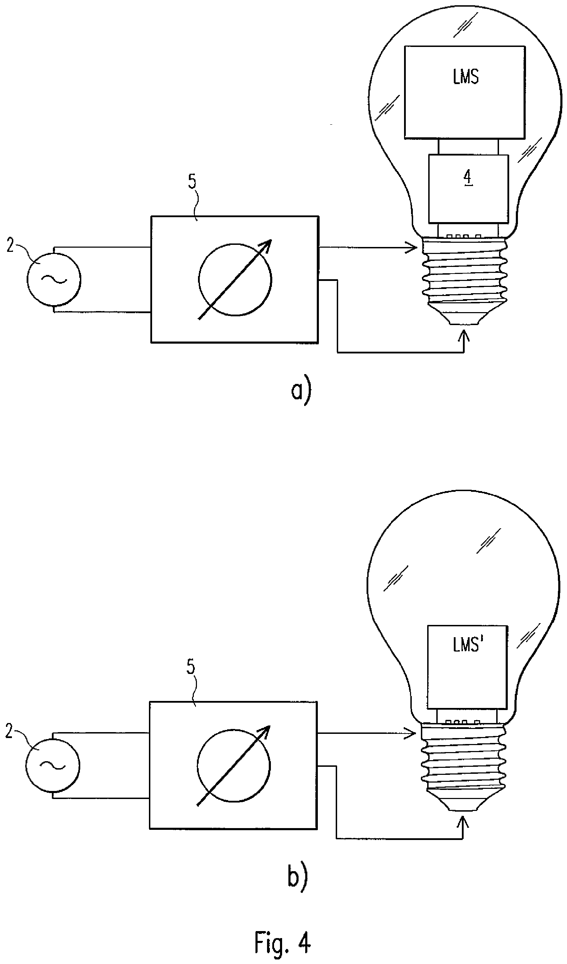

Fig. 4a zeigt nunmehr eine Anwendung der Anordnungen aus den Figs. 3a und 3b in jeweils einer Retrofit Lampe. Hierbei ist der Gleichrichter 4 in einer Komponente 4 dargestellt, wobei dies anzeigen soll, dass der Gleichrichter 4 vor der LED-Leuchtmittelstrecke LMS angeordnet werden kann.

Als Alternative zu der Retrofit-Lampe können die im Folgenden beschriebenen Beispiele auch für eine LED-Lampe angewendet werden.

Fig. 4b zeigt eine Anwendung der Anordnung aus der Fig. 3c, bei der entweder die LED-Leuchtmittelketten gegenparallel angeordnet sind oder ein Gleichrichter direkt in die LED-Leuchtmittelstrecke integriert ist.

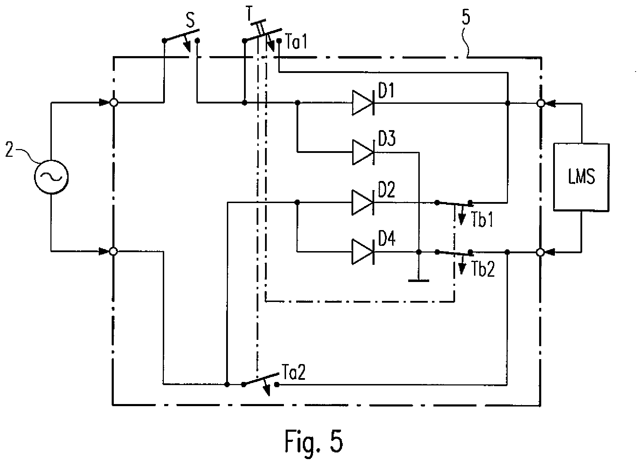

In Fig. 5 zeigt beispielhaft eine Ausführung des Steuergerätes 5. Das Steuergerät 5 kann einer Retrofit-Lampe, aufweisend eine LED-Leuchtmittelstrecke LMS, vorgeschaltet sein. Hier wird die Netzversorgung 2 der LED-Leuchtmittelstrecke LMS über das Steuergerät 5 zugeführt. Die LED-Leuchtmittelstrecke LMS wird ausgehend von der Netzversorgung 2 mit Leistung versorgt. Die LED-Leuchtmittelstrecke LMS wird vorzugsweise durch die LED-Leuchtmittelstrecke LMS, LMS' gebildet, der der Gleichrichter 4 vorgeschaltet sein kann.

Vorzugsweise bilden die Versorgungsanschlüsse der Retrofit-Lampe gleichzeitig die Schnittstelle zu dem Steuergerät 5, wie es bspw. bei Glühlampenfassungen der Fall ist.

Mit dem Steuergerät 5 verbunden oder in diesem integriert sind ein von außen zugänglicher Netzschalter S und ein ebenfalls von außen zugänglichen Taster Tauf.
Der Taster T, wirkt auf zwei Kontaktpaare Ta1/Ta2 einerseits und Tb1/Tb2 andererseits ein, und zwar gegensinnig. Das bedeutet, dass im dargestellten Ruhezustand des Tasters T das erste Kontaktpaar Ta1/Ta2 offen und das zweite Kontaktpaar Tb1/Tb2 geschlossen ist. Wird der Taster T entgegen der Kraft einer (nicht dargestellten) Feder niedergedrückt, so wird das erste Kontaktpaar Ta1/Ta2 geöffnet, und das zweite Kontaktpaar Tb1/Tb2 wird geschlossen.

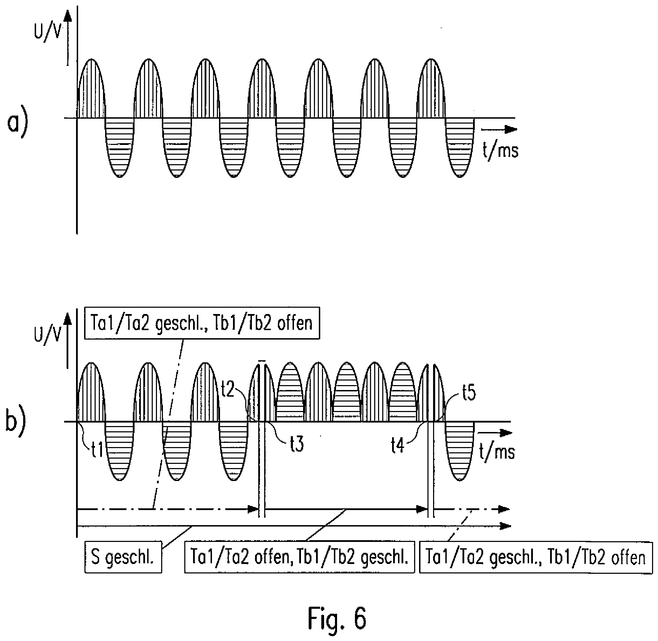

Das Steuergerät 5 enthält ferner vier Gleichrichterdioden D1, D2, D3, D4. Diese sind so mit den zwei Kontaktpaaren Ta1, Ta2 sowie Tb1, Tb2 verschaltet, dass der Last L bei geschlossenem Netzschalter S und nicht gedrücktem Taster T die Netzspannungshalbwellen so zugeführt werden, wie sie in Fig. 6a dargestellt sind, also mit wechselnder Polarität.

Fig. 6b zeigt den Fall, dass der Netzschalter S zum Zeitpunkt t1 geschlossen und der Taster T etwas später zum Zeitpunkt t2 gedrückt wird. Zum Zeitpunkt t3 ist der Umschaltvorgang vollendet.

Für die Umschaltung benötigen die Kontaktpaare Tal/Ta2 einerseits und die Kontaktpaare Tb1/Tb2 andererseits eine bestimmte, wenn auch nur kurze Zeit, in der die Netzspannung unterbrochen wird. Diese Unterbrechung ist jedoch so kurz, dass sie weggepuffert werden kann. Die Darstellung der Netzunterbrechung in Fig. 6b ist nicht maßstäblich und im Zusammenhang mit der grundsätzlichen Funktionsweise des Steuergerätes 5 auch von untergeordneter Bedeutung.

Zum Zeitpunkt t4 wird der Taster T wieder losgelassen. Von t3 bis t4 werden nun an die Last Netzspannungshalbwellen ausschließlich gleicher Polarität geliefert.

Nach dem Loslassen des Tasters T zum Zeitpunkt t4 folgt wieder eine durch das Umschalten der Kontaktpaare Tal/Ta2 einerseits und Tb1/Tb2 andererseits bedingte kurze Unterbrechung der Netzspannung. Vom Zeitpunkt t5 an werden der Last die Netzspannungshalbwellen wieder mit der von dem Netz N vorgegebenen Polarität an die Last L geliefert, also mit wechselnder Polarität.

Die mit dem Taster T festlegbare zeitliche Gesamtlänge t_{ges}= t4-t3 der Folge von Netzspannungshalbwellen mit gleicher Polarität bestimmt den Grad der Beeinflussung oder Änderung eines Parameters der Last L. Der Parameter ist im konkreten Fall der Dimmgrad bzw. die Helligkeit der Retrofit LED-Lampe.

Es versteht sich, dass man durch Umkehr der Schaltungsanordnung der Gleichrichterdioden D1 bis D4 auch die Polarität der Netzspannungshalbwellen zwischen den Zeitpunkten t3 und t4 umkehren kann. Hier liegt also ein zusätzlicher Freiheitsgrad für die zu übertragende Steuerinformation, die beispielsweise zur Einstellung der Farbe der zu steuernden Lampe verwendet werden kann. Eine weitere Möglichkeit zur Übertragung zusätzlicher Steuerinformationen besteht darin, dass man die Folge von Netzspannungshalbwellen mit gleicher Polarität wiederholt, und zwar mit einer bestimmten Wiederholungsrate.

Es ist möglich die Schaltungsanordnung derart zu gestalten, dass Netzspannungshalbwellen unterschiedlicher, d.h. entgegengesetzter, Polarität erzeugt werden können. Die Polarität der Netzspanungshalbwellen kann dann beispielweise dazu verwendet werden Informationen zu kodieren.

Beispielsweise kann die Dimmrichtung eines Dimmvorgangs der Lichtquelle durch die Polarität einer Folge von Netzspannungshalbwellen gleicher Polarität vorgegeben werden. So können etwa aufeinanderfolgende Netzspannungshalbwellen einer ersten Polarität Dimmgrade höherer Helligkeit bewirken, während aufeinanderfolgende Netzspannungshabwellen einer zweiten, umgekehrten Polarität Dimmgrade niedrigerer Helligkeit bewirken. Die erste Polarität verursacht also ein Aufwärtsdimmen, die zweite Polarität ein Abwärtsdimmen einer dimmbaren Lichtquelle.

Das Aufwärts- bzw. Abwärtsdimmen kann dabei kontinuierlich erfolgen und wird zum Beispiel solange fortgesetzt, wie aufeinanderfolgende Netzspannungshalbwellen gleicher Polarität erzeugt werden. Kontinuierlich kann dabei bedeuten, dass für jede vorbestimmte Anzahl aufeinanderfolgender Netzspannungshalbwellen gleicher Polarität der Dimmgrad um eine kleinste mögliche Dimmstufe erhöht bzw. erniedrigt wird. Je mehr Netzspannungshalbwellen gleicher Polarität aufeinander folgen, desto stärker wird letztendlich der Dimmgrad nach oben oder nach unten verändert.

Es kann auch zunächst eine bestimmte Anzahl an Netzspannungshalbwellen gleicher Polarität erforderlich sein, um überhaupt ein Aufwärts- bzw. ein Abwärtsdimmen durchführen zu können, also eine Art Startsignal.

Denkbar sind auch komplexere Kodierungsschemata, wobei Steuerinformation über die Anzahl oder die konkrete Abfolge von Netzspannungshalbwellen gleicher oder unterschiedlicher Polarität übermittelt wird. So kann beispielweise eine erste vorgegebene Anzahl von Netzspannungshalbwellen gleicher Polarität oder eine erste Abfolge von Netzspannungshalbwellen wechselnder Priorität ein Aufwärtsdimmen aktivieren, eine andere Anzahl oder eine andere Abfolge kann ein Abwärtsdimmen aktivieren.

Insbesondere können auch Dimmsprünge durch eine bestimmte Anzahl oder eine bestimmte Abfolge von Polaritäten von Netzspannungshalbwellen kodiert sein bzw. ein solcher Dimmsprung kann dadurch ausgelöst werden. Eine vorbestimmte Kombination von Polaritäten von Netzspannungshalbwellen könnte zum Beispiel eine nichtkontinuierliche Änderung des Dimmgrads um einen ersten vorgegebenen Wert verursachen. Eine zweite vorgegebene Kombination von Polaritäten könnte hingegen eine nichtkontinuierliche Änderung des Dimmgrads um einen zweiten vorgegebenen Wert verursachen. Eine weitere Möglichkeit die verschiedenen Polaritäten von Netzspannungshalbwellen auszunutzen ist das Einstellen einer Dimmgeschwindigkeit. So könnte beispielweise zunächst eine erste Abfolge oder Anzahl von Polaritäten von Netzspannungshalbwellen festlegen, ob im Folgenden ein Aufwärtsdimmen oder ein Abwärtsdimmen durchgeführt werden soll.

Danach könnten zum Beispiel Netzspannungshalbwellen einer ersten Polarität einen schnelleren Dimmvorgang, Netzspannungswellen einer zweiten Polarität einen langsameren Dimmvorgang ausführen. Es ist ferner auch denkbar eine bestimmte Abfolge von Polaritäten von Netzspannungshalbwellen vorzugeben, welche die Dimmgeschwindigkeit während eines Dimmvorgangs verändert. Zum Beispiel könnte eine vorgegebene erste Abfolge die Dimmgeschwindigkeit um einen bestimmten Prozentsatz oder Absolutbetrag erhöhen, eine zweite vorgegebene Abfolge könnte die Dimmgeschwindigkeit um einen bestimmten Prozentsatz oder Absolutbetrag verringern.

Es ist ferner möglich komplexe Abfolgen oder Muster von Netzspannungshalbwellen oder von Polaritäten von Netzspannungshalbwellen dazu zu verwenden, andere Betriebsparameter als die Helligkeit einer Lichtquelle zu ändern oder zu konfigurieren. Ein Beispiel ist die Farbe oder die Farbtemperatur der Lichtquelle. Ein anderes Beispiel wäre eine Einstellung, ob das Licht kontinuierlich oder gepulst von der Lichtquelle ausgestrahlt wird. Auch möglich wäre es ein automatisches Ausschalten der Lichtquelle nach einer vorbestimmten Betriebszeit durch die so übermittelte Steuerinformation zu programmieren oder ein automatisches Einschalten, beispielweise nach einer vorbestimmten Zeitdauer, zu programmieren. Der Taster T steht nur als Beispiel für einen Signalgeber der manuell betätigbar ist (bspw. auch ein Schalter, Drehdimmer etc.) oder nicht-manuelle Steuersignale an einer Schnittstelle zugeführt bekommt oder dieser selbst erzeugt (bspw. Sensor, wie bspw. Tageslichtsensor, Farbsensor etc.).

Anstelle eines Tasters kann auch ein Relais verwendet werden, welches beispielsweise durch einen Taster ausgelöst wird.

Das Beispiel der Fig. 5 und 6 ist nur eine mögliche Ausführungsform der Erfindung, anhand der beispielhaft erläutert ist, wie die Dimminformation auf die Versorgung aufmoduliert und somit über die Versorgung der Leuchtmittelstrecke zugeführt werden kann.

In einer alternativen Variante oder auch in einer Kombination kann wie bereits erläutert auch ein selektiver Phasenan/-abschnitt zur Übermittelung der Dimminformation über die Versorgung genutzt werden. In diesem Fall kann beispielsweise das Steuergerät 5 für eine vorbestimmte Zeitdauer oder Anzahl einen Phasenanschnitt oder Phasenabschnitt durchführen, und die Zeitdauer oder Anzahl kann als Dimminformation ausgelesen werden.

Die durch das Steuergerät 5 kodierten Informationen (Dimminformationen) werden dann vorzugsweise von der Steuereinheit SE der LED-Leuchtmittelstrecke LMS, LMS, ausgewertet und an die LED-Leuchtmittelstrecke LMS, LMS, übertragen werden.

## Patentansprüche

1. Dimmbare LED-Leuchtmittelstrecke (LMS, LMS') aufweisend wenigstens zwei parallel und/oder gegenparallel geschaltete LED-Leuchtmittelketten (LMK1, LMK2, LMK3) aufweisend jeweils mehrere Leuchtdioden (L), wobei die LED-Leuchtmittelstrecke (LMS, LMS') weiter eine Steuereinheit (SE) aufweist und über eine Versorgung (V) gespeist wird, wobei die Steuereinheit (SE) dazu eingerichtet ist, über die Versorgung (V) eine Dimminformation zugeführt zu bekommen und abhängig von der zugeführten Dimminformation und zu deren Umsetzung einzelne der parallel/gegenparallel geschalteten LED-Leuchtmittelketten (LMK1, LMK2, LMK3) stufenweise an- und/oder abzuschalten,
**dadurch gekennzeichnet, dass**
jede Leuchtdiode (L) durch jeweils wenigstens ein parallel dazu vorgesehenes und von der Steuereinheit (SE) schaltbares Schaltelement (S) überbrückbar ist,
wobei die Leuchtdioden (L) und die Schaltelemente (S) zur Überbrückung in einer Matrixstruktur angeordnet sind,
und wobei die Steuereinheit (SE) dazu eingerichtet ist, abhängig von der elektrischen Versorgung (V) der LED-Leuchtmittelstrecke (LMS, LMS') einzelne Leuchtdioden, die in verschiedenen LED-Leuchtmittelketten (LMK1, LMK2, LMK3) im Wesentlichen eine Koordinate in ihrer räumlichen Ausrichtung teilen, in den LED-Leuchtmittelketten (LMK1, LMK2, LMK3) durch Aktivieren bzw. Deaktivieren der Schaltelemente (S) an- bzw. abzuschalten.

2. Dimmbare LED-Leuchtmittelstrecke nach Anspruch 1 oder 2, wobei die elektrische Versorgung (V) der LED-Leuchtmittelstrecke (LMS, LMS') eine Wechselspannung oder eine Gleichspannung ist.

3. Dimmbare LED-Leuchtmittelstrecke nach einem der vorgehenden Ansprüche, wobei ein Konverter (3) dazu eingerichtet ist, eine Wechselspannung in eine Gleichspannung zu wandeln und die Gleichspannung als elektrische Versorgung (V) der LED-Leuchtmittelstrecke (LMS, LMS') bereitzustellen.

4. Dimmbare LED-Leuchtmittelstrecke nach Anspruch 3, wobei der Konverter (3) dazu eingerichtet ist, eine der LED-Leuchtmittelstrecke (LMS, LMS') zugeführte elektrische Versorgung (V) abhängig von einer Dimminformation zu verändern.

5. Dimmbare LED-Leuchtmittelstrecke nach einem der vorgehenden Ansprüche, wobei die LED-Leuchtmittelstrecke (LMS, LMS') gegenparallel geschaltete Leuchtmittelketten (LMK1, LMK2, LMK3)aufweist und direkt ausgehend von einer Wechselspannung betreibbar ist.

6. Dimmbare LED-Leuchtmittelstrecke nach einem der vorgehenden Ansprüche, wobei die LED-Leuchtmittelstrecke (LMS, LMS') parallel geschaltete Leuchtmittelketten (LMK1, LMK2, LMK3) aufweist, denen ein Gleichrichter (4) vorgeschaltet ist und direkt ausgehend von einer Wechselspannung betreibbar ist.

7. Dimmbare LED-Leuchtmittelstrecke nach einem der vorgehenden Ansprüche, wobei die Steuereinheit (SE) dazu eingerichtet ist, ein Phasenanschnittsignal oder Phasenabschnittsignal und/oder eine selektive Halbwellengleichrichtung auszuwerten um die Dimminformation zu erfassen.

8. Dimmbare LED-Leuchtmittelstrecke nach einem der vorgehenden Ansprüche, wobei die Steuereinheit (SE) dazu eingerichtet ist, durch Auswerten der elektrischen Versorgung (V), insbesondere einer Veränderung der elektrischen Versorgung (V), die Dimminformation zu erfassen.

9. Dimmbare LED-Leuchtmittelstrecke nach einem der vorgehenden Ansprüche, wobei die Dimminformation eine Amplitude/Amplitudenänderung der elektrischen Versorgung (V) ist.

10. Dimmbare LED-Leuchtmittelstrecke nach einem der vorgehenden Ansprüche, wobei in jeder LED-Leuchtmittelzeile wenigstens eine Leuchtdiode (L) überbrückbar ist und in jeder LED-Leuchtmittelkette (LMK1, LMK2, LMK3) wenigstens ein von der Steuereinheit (SE) schaltbares Schaltelement (S) vorgesehen ist, das dazu eingerichtet ist, die jeweilige LED-Leuchtmittelkette (LMK1, LMK2, LMK3) an- oder abzuschalten.

11. LED-Lampe aufweisend eine LED-Leuchtmittelstrecke (LMS, LMS') nach einem der vorstehenden Ansprüche.

12. Retrofit Lampe aufweisend eine LED-Leuchtmittelstrecke (LMS, LMS') nach einem der Ansprüche 1 bis 10.

13. Verfahren zur Ansteuerung einer dimmbaren LED-Leuchtmittelstrecke (LMS, LMS') mit wenigstens zwei parallel und/oder gegenparallel geschalteten LED-Leuchtmittelketten (LMK1, LMK2, LMK3) aufweisend jeweils mehrere Leuchtdioden (L), wobei die LED-Leuchtmittelstrecke über eine Versorgung (V) gespeist wird, und
wobei eine Steuereinheit (SE) der LED-Leuchtmittelstrecke (LMS, LMS') eine über die Versorgung (V) zugeführte Dimminformation erfasst und abhängig von der erfassten Dimminformation und zu deren Umsetzung einzelne von parallel/gegenparallel geschalteten LED-Leuchtmittelketten (LMK1, LMK2,
LMK3) aufweisend jeweils mehrere Leuchtdioden (L) stufenweise an- und/oder abschaltet
**dadurch gekennzeichnet, dass**
jede Leuchtdiode (L) durch jeweils wenigstens ein
parallel dazu vorgesehenes und von der Steuereinheit (SE) schaltbares Schaltelement (S) überbrückbar ist und die Leuchtdioden (L) und die Schaltelemente (S) zur Überbrückung in einer Matrixstruktur angeordnet sind, wobei das Verfahren folgenden Schritt umfasst:
An- bzw. Abschalten einzelner Leuchtdioden in den Leuchtmittelketten (LMK1, LMK2, LMK3), die in verschiedenen LED-Leuchtmittelketten (LMK1, LMK2, LMK3) im Wesentlichen eine Koordinate in ihrer räumlichen Ausrichtung teilen, in den LED-Leuchtmittelketten (LMK1, LMK2, LMK3) durch Aktivieren bzw. Deaktivieren der Schaltelemente (S) in Abhängigkeit von der elektrischen Versorgung (V) der LED-Leuchtmittelstrecke (LMS, LMS') mittels der Steuereinheit (SE).

## Claims

1. A dimmable LED lighting means series (LMS, LMS') having at least two LED lighting means chains (LMK1, LMK2, LMK3) connected in parallel and/or anti-parallel having in each case a plurality of light-emitting diodes (L), wherein the LED lighting means series (LMS, LMS') further has a control unit (SE) and is fed via a supply (V), wherein the control unit (SE) is configured to receive a piece of dimming information supplied via the supply (V) and to switch on and/or off in stages individual ones of the LED lighting means chains (LMK1, LMK2, LMK3) connected in parallel/anti-parallel depending on the supplied dimming information and for the implementation thereof,
**characterized in that**
each light-emitting diode (L) can be bridged by in each case at least one switching element (S), which is provided in parallel thereto and can be switched by the control unit (SE),
wherein the light-emitting diodes (L) and the switching elements (S) are arranged for the bridging in a matrix structure,
and wherein the control unit (SE) is configured, depending on the electrical supply (V) of the LED lighting means series (LMS, LMS'), to switch on or off individual light-emitting diodes, which substantially share a coordinate in their spatial alignment in different LED lighting means chains (LMK1, LMK2, LMK3), by activating or deactivating the switching elements (S) in the LED lighting means chains (LMK1, LMK2, LMK3).

2. The dimmable LED lighting means series according to Claim 1 or 2, wherein the electrical supply (V) of the LED lighting means series (LMS, LMS') is an AC voltage or a DC voltage.

3. The dimmable LED lighting means series according to any one of the preceding claims, wherein a converter (3) is configured to convert an AC voltage into a DC voltage and to provide the DC voltage as an electrical supply (V) of the LED lighting means series (LMS, LMS').

4. The dimmable LED lighting means series according to Claim 3, wherein the converter (3) is configured to change an electrical supply (V) supplied to the LED lighting means series (LMS, LMS') depending on a piece of dimming information.

5. The dimmable LED lighting means series according to any one of the preceding claims, wherein the LED lighting means series (LMS, LMS') has lighting means chains (LMK1, LMK2, LMK3) connected in anti-parallel and can be operated directly on the basis of an AC voltage.

6. The dimmable LED lighting means series according to any one of the preceding claims, wherein the LED lighting means series (LMS, LMS') has lighting means chains (LMK1, LMK2, LMK3) connected in parallel, upstream of which a rectifier (4) is connected and can be operated directly on the basis of an AC voltage.

7. The dimmable LED lighting means series according to any one of the preceding claims, wherein the control unit (SE) is configured to evaluate a phase control signal or phase section signal and/or a selective half wave rectification, in order to detect the dimming information.

8. The dimmable LED lighting means series according to any one of the preceding claims, wherein the control unit (SE) is configured to detect the dimming information by evaluating the electrical supply (V), in particular, a change in the electrical supply (V).

9. The dimmable LED lighting means series according to any one of the preceding claims, wherein the dimming information is an amplitude/amplitude change in the electrical supply (V).

10. The dimmable LED lighting means series according to any one of the preceding claims, wherein in each LED lighting means row at least one light-emitting diode (L) can be bridged and in each LED lighting means chain (LMK1, LMK2, LMK3) at least one switching element (S), which can be switched by the control unit (SE), is provided, which is configured to switch the respective LED lighting means chain (LMK1, LMK2, LMK3) on or off.

11. An LED lamp having an LED lighting means series (LMS, LMS') according to any one of the preceding claims.

12. A retrofit lamp having an LED lighting means series (LMS, LMS') according to any one of Claims 1 to 10.

13. A method for controlling a dimmable LED lighting means series (LMS, LMS') with at least two lighting means chains (LMK1, LMK2, LMK3) connected in parallel and/or in anti-parallel having in each case a plurality of light-emitting diodes (L), wherein the LED lighting means series is fed via a supply (V), and
wherein a control unit (SE) of the LED lighting means series (LMS, LMS') detects a piece of dimming information supplied via the supply (V) and switches on and/or off in stages individual ones of the LED lighting means chains (LMK1, LMK2, LMK3) connected in parallel/anti-parallel in each case having a plurality of light-emitting diodes (L) depending on the detected dimming information and for the implementation thereof
**characterized in that**
each light-emitting diode (L) can be bridged by in each case at least one switching element (S), which is provided in parallel thereto and can be switched by the control unit (SE) and the light-emitting diodes (L) and the switching elements (S) are arranged for the bridging in a matrix structure,
wherein the method comprises the following step:
Switching on or off of individual light-emitting diodes in the lighting means chain (LMK1, LMK2, LMK3),
which substantially share a coordinate in their spatial alignment in different LED lighting means chains (LMK1, LMK2, LMK3), by activating or deactivating the switching elements (S) in the LED lighting means chains (LMK1, LMK2, LMK3) depending on the electrical supply (V) of the LED lighting means series (LMS, LMS') by means of the control unit (SE).

## Revendications

1. Ligne de moyens d'éclairage à LED réglable (LMS, LMS') comprenant au moins deux chaînes de moyens d'éclairage à LED branchées parallèlement et/ou contre-parallèlement (LMK1, LMK2, LMK3) comprenant chacune plusieurs diodes électroluminescentes (L), dans laquelle la ligne de moyens d'éclairage à LED variable (LMS, LMS') comprend en outre une unité de commande (SE) et est alimenté par l'intermédiaire d'une alimentation (V), dans laquelle l'unité de commande (SE) est conçue pour recevoir, par l'intermédiaire de l'alimentation (V), une information de gradation et pour mettre en marche et/ou arrêter progressivement, en fonction de l'information de gradation reçue et pour leur mise en œuvre, certaines chaînes de moyens d'éclairage à LED branchées parallèlement et/ou contre-parallèlement (LMK1, LMK2, LMK3), **caractérisé en ce que** chaque diode électroluminescente (L) peut être pontée par au moins un élément de commutation (S) branché parallèlement à celle-ci et pouvant être commuté par l'unité de commande (SE), dans laquelle les diodes électroluminescentes (L) et les éléments de commutation (S) sont disposés dans une structure matricielle pour le pontage et dans laquelle l'unité de commande (SE) est conçue pour mettre en marche resp. arrêter, en fonction de l'alimentation électrique (V) de la ligne de moyens d'éclairage à LED réglable (LMS, LMS'), certaines diodes, qui partagent, dans différentes chaînes de moyens d'éclairage à LED (LMK1, LMK2, LMK3) globalement une coordonnée dans leur orientation dans l'espace, dans les chaînes de moyens d'éclairage à LED (LMK1, LMK2, LMK3), par activation resp. désactivation des éléments de commutation (S).

2. Ligne de moyens d'éclairage à LED réglable selon la revendication 1 ou 2, dans laquelle l'alimentation électrique (V) de la ligne de moyens d'éclairage à LED (LMS, LMS') est une tension alternative ou une tension continue.

3. Ligne de moyens d'éclairage à LED réglable selon l'une des revendications précédentes, dans laquelle un convertisseur (3) est conçu pour convertir une tension alternative en une tension continue et pour mettre à disposition la tension continue en tant qu'alimentation électrique (V) de la ligne de moyens d'éclairage à LED (LMS, LMS').

4. Ligne de moyens d'éclairage à LED réglable selon la revendication 3, dans laquelle le convertisseur (3) est conçu pour modifier une alimentation électrique (V) appliquée à la ligne de moyens d'éclairage à LED (LMS, LMS') en fonction d'une information de gradation.

5. Ligne de moyens d'éclairage à LED réglable selon l'une des revendications précédentes, dans laquelle la ligne de moyens d'éclairage à LED (LMS, LMS') comprend des chaînes de moyens d'éclairage à LED branchées contre-parallèlement (LMK1, LMK2, LMK3) et peut fonctionner directement à partir d'une tension alternative.

6. Ligne de moyens d'éclairage à LED réglable selon l'une des revendications précédentes, dans laquelle la ligne de moyens d'éclairage à LED (LMS, LMS') comprend des chaînes de moyens d'éclairage à LED branchées parallèlement (LMK1, LMK2, LMK3), en amont desquelles est branché un redresseur (4) et peut fonctionner directement à partir d'une tension alternative.

7. Ligne de moyens d'éclairage à LED réglable selon l'une des revendications précédentes, dans laquelle l'unité de commande (SE) est conçue pour analyser un signal de coupure en entrée de phase ou un signal de coupure en sortie de phase et/ou un redressement à demi-onde afin de détecter l'information de gradation.

8. Ligne de moyens d'éclairage à LED réglable selon l'une des revendications précédentes, dans laquelle l'unité de commande (SE) est conçue pour détecter l'information de gradation par l'analyse de l'alimentation électrique (V), plus particulièrement d'une modification de l'alimentation électrique (V).

9. Ligne de moyens d'éclairage à LED réglable selon l'une des revendications précédentes, dans laquelle l'information de gradation est une amplitude/variation d'amplitude de l'alimentation électrique (V).

10. Ligne de moyens d'éclairage à LED réglable selon l'une des revendications précédentes, dans laquelle, dans chaque rangée de moyens d'éclairage à LED, au moins une diode électroluminescente (L) peut être pontée et, dans chaque chaîne de moyens d'éclairage à LED (LMK1, LMK2, LMK3), est prévu un élément de commutation (S) pouvant être commuté par l'unité de commande (SE), qui est conçue pour mettre en marche ou arrêter la chaîne de moyens d'éclairage à LED (LMK1, LMK2, LMK3) correspondante.

11. Lampe à LED comprenant une ligne de moyens d'éclairage à LED (LMS, LMS') selon l'une des revendications précédentes.

12. Lampe de rétrofit comprenant une ligne de moyens d'éclairage à LED (LMS, LMS') selon l'une des revendications 1 à 10.

13. Procédé de contrôle d'une ligne de moyens d'éclairage à LED (LMS, LMS') avec au moins deux chaînes de moyens d'éclairage à LED branchées parallèlement et/ou contre-parallèlement (LMK1, LMK2, LMK3) comprenant chacune plusieurs diodes électroluminescentes (L), dans laquelle la ligne de moyens d'éclairage à LED est alimentée par l'intermédiaire d'une alimentation (V) et dans laquelle une unité de commande (SE) de la ligne de moyens d'éclairage à LED (LMS, LMS') détecte une information de gradation entrée par l'intermédiaire de l'alimentation (V) et met en marche et/ou arrête progressivement, pour sa mise en œuvre, certaines chaînes de moyens d'éclairage à LED branchées parallèlement et/ou contre-parallèlement (LMK1, LMK2, LMK3) comprenant chacune plusieurs diodes électroluminescentes (L), **caractérisé en ce que** chaque diode électroluminescente (L) peut être pontée chacune par au moins un élément de commutation (S) branché parallèlement à celle-ci et pouvant être commuté par l'unité de commande (SE) et les diodes électroluminescentes (L) et les éléments de commutation (S) sont disposés dans une structure matricielle pour le pontage, dans laquelle le procédé comprend l'étape suivante :
mise en marche resp. arrêt de certaines diodes électroluminescentes dans les chaînes de moyens d'éclairage (LMK1, LMK2, LMK3) qui partagent, dans différentes chaînes de moyens d'éclairage à LED (LMK1, LMK2, LMK3) globalement une coordonnée dans leur orientation dans l'espace, dans les chaînes de moyens d'éclairage à LED (LMK1, LMK2, LMK3), par activation resp. désactivation des éléments de commutation (S) en fonction de l'alimentation électrique (V) de la ligne de moyens d'éclairage à LED (LMS, LMS') au moyen de l'unité de commande (SE).
